# EUROPEAN PATENT SPECIFICATION

(11) **EP 3 042 133 B1**
(45) Date of publication and mention of the grant of the patent: **15.05.2019**
(21) Application number: 14781317.4
(22) Date of filing: 05.09.2014
(51) Int. Cl.: F24S 20/66, F24S 23/30, F24S 23/70, F24S 30/425

(54) **FACADE MODULE ELEMENT WITH AN INTEGRATED SOLAR COLLECTOR SYSTEM**
FASSADENMODULELEMENT MIT INTEGRIERTEM SONNENKOLLEKTORSYSTEM
ÉLÉMENT DE MODULE DE FAÇADE À SYSTÈME DE COLLECTEUR SOLAIRE INTÉGRÉ

(30) Priority: 06.09.2013 NL 2011400
(43) Date of publication of application: 13.07.2016
(73) Proprietor: Solfence Holding B.V., 3069 XK Rotterdam (NL)
(72) Inventor: KRIEG, Johannes, NL-3069 XK Rotterdam (NL); EZZAHIRI, Sidi Mohamed, NL-3071 NN Rotterdam (NL); NASIF, Badia Salman, NL-3034 ZM Rotterdam (NL); BAKKER, Anne Peter Cornelis, NL-4207 NN Gorinchem (NL); MUIJS, Jacobus Willem, NL-2964 DC Groot-Ammers (NL)
(74) Representative: Nederlandsch Octrooibureau
(86) International application number: PCT/NL2014/050609
(87) International publication number: WO 2015/034361

(56) References cited:
- WO-A2-2010/012832
- WO-A2-2013/027229
- US-A- 3 048 375
- US-A- 4 304 218
- US-A1- 2008 308 090
- US-A1- 2011 259 396

## Description

### BACKGROUND OF THE INVENTION

### 1. Field of the Invention

The invention relates to a facade module element for use in a structure, comprising a frame and a solar thermal energy collecting system within this frame. In addition, the invention relates to a structure or construction comprising at least one of such a facade module element.

### 2. Description of the Related Art

Using the energy of the sun to generate heat or electricity is a widely known technique. Many ways to use this solar energy effectively have been developed, such as photovoltaic solar cells to generate electricity from solar irradiation and solar energy collectors to collect the heat generated by the sun rays. WO 2010/012832 A2, US 2008/308090 A1, US 4 304 218 A, US 3 048 375 A and WO 2013/027229 A2 all show systems for collecting solar energy.

To collect a useful amount of solar energy, a relatively large area covered with either photovoltaic solar cells or solar thermal energy collectors are required. These relatively large areas are available in scarcely inhabited areas, but in densely inhabited areas these large areas are available as well, such as on roof tops of buildings or in noise-protection dams or walls along a road. In addition, the facades of buildings or noise-protection walls, especially facades or walls facing in a south direction (southeast to south-west), can be used to catch the thermal energy from the sun.

Patent publication US4014313 describes an apparatus for collecting solar thermal energy that is integrated into an upright or vertical surface of a building or structure. The apparatus comprises a closed compartment and a plurality of radiant energy receiving elements substantially parallel with each other and with an energy receiving surface at the exterior vertical surface of the building and orienting the energy receiving surface at an angle for efficiently receiving radiant energy. The angle of the energy receiving surface depends on the latitude where the apparatus is used and is fixed for every latitude. The energy receiving surface is made of a good heat conductive material to conduct heat to the solar energy collector.

A disadvantage of such an apparatus at a fixed angle is that an optimal efficiency in receiving solar energy is only obtained at a certain time per day, i.e. when the sun's rays are perpendicularly directed to the energy receiving surfaces. In other stages of the sun's path, the solar energy receiving surfaces will at least partly block the sunlight from each other.

It would be desirable to provide a solar energy collecting device that improved the efficiency throughout the daytime.

### BRIEF SUMMARY OF THE INVENTION

The present invention according to claim 1 relates to a facade module element for a structure or construction, comprising
- a closed housing, comprising a frame, a light transmitting front panel and a rear face, which are at a distance from each other defined by side faces;
- a solar energy collecting system positioned in the housing, comprising a solar energy collector, a solar energy concentrator concentrating incident solar energy radiation for collection by the solar energy collector, and
- a sun tracking mechanism arranged to move at least the solar energy concentrator with respect to the frame about a tracking axis.

The frame houses the solar energy collecting system and functions as a structural support for the solar energy collecting system. By connecting a plurality of frames to each other, a three dimensional structure can be formed, housing a plurality of solar energy collecting systems.

The housing has a light transmitting front panel to allow light radiated by the sun to access the solar energy collecting system. The light transmitting front panel is closed and can comprise a transparent or translucent (solid) material. The light from the sun encompasses electromagnetic waves including ultraviolet A, B and C, visible light and infrared A, B and C, of which the frequencies range between 100 nm for ultraviolet A to about 1 mm for infrared C. The front panel is positioned in front of the solar energy collecting system to protect this system from environmental influences such as wind, rain and contamination of the solar energy collecting system.

Optionally, the front panel is removable to open the facade module element, for instance after assembly of a structure, such as a façade, from multiple facade module elements. Removing the front panel has the advantage that the housing, the solar energy collecting system and the sun tracking mechanism can be cleaned even after assembly of the structure, such as a facade. The housing has a three-dimensional structure, having a front panel and a rear face, which can either be open, or closed by a rear panel. The front panel and the rear face are at a distance from each other defined by side faces, which can either be open, or closed by respective side panels.

The solar energy collecting system includes a solar energy collector and a solar energy concentrator concentrating incident solar radiation for collection by the solar energy collector. To collect solar energy in an efficient way, the solar energy concentrator catches the incident solar radiation and concentrates the incoming beam by focussing the incoming beam towards the solar energy collector. The concentrated solar radiation is then transmitted to the solar energy collector. The solar energy collector collects the energy of the solar radiation as heat that can be used for various purposes.

The sun tracking mechanism moves at least the solar energy concentrator with respect to the frame about a tracking axis to follow the path of the sun during the day. The tracking axis can be a panning axis to follow the movement of the sun from East to West from sunrise to sunset. Alternatively or additionally, the tracking axis can be an elevation axis to follow the increasing and decreasing elevation of the sun with respect to the horizon between sunrise and sunset. Preferably, a single tracking axis is provided to follow either the elevation angle, i.e. the altitude of the sun, the angle between the horizon and the centre of the sun's disc, or the East-West path of the sun. The sun tracking mechanism can be part of a sun tracking system, further comprising either a sun tracking device actually following the sun path or a pre-programmed computerized system to follow the sun path of the latitude of the position.

The facade module element may form a self-supporting building element usable to form part of a building envelope for the structure, such as a facade of a building.

The building envelope is the outer shell of a building that defines the boundaries between inside and outside. The building envelope is therefore dominated by features and attributes that govern appearance, proportions, choice of materials and cultural aspects. Its primary function is to protect the building against wind, precipitation and solar radiation. As comfort demands have grown, the building envelope has taken a more complex climate-regulating function.

The facade module element can be used in a structure, such as a noise-protection wall or dam or a facade or roof of a building, and can be a non-structural building element of the structure, i.e. the facade module element can be used to build a facade to close a building and define the inside and outside of the building. The facade module elements can for instance be used to close the opening between two or more floor elements or between a floor element and a roof element of a structure. It need not have a load bearing function, such as floors or posts, beams and pillars may have, such that a load bearing structure to support the facade may be necessary. The facade is understood as the part of a building facing outwards and forms the part of a building viewed from the street. Additional elements to build the facade can be used, but these additional elements may not be necessary if the facade module elements are used. The facade module elements can be attached to the building structure by any means, or can form an independently standing structure.

According to an embodiment, the sun tracking mechanism is arranged to pivot the solar energy system with respect to the frame about a tracking axis substantially parallel to the light transmitting front panel in order to track the sun during the day. Preferably, the solar energy collector remains stationary with respect to the frame and the solar energy concentrator is pivotable with respect to the frame and the solar energy collector by means of the sun tracking mechanism. Having the tracking axis substantially parallel to the light transmitting front panel provides for a compact frame with ample room for the solar energy concentrator to move about the tracking axis.

The solar energy concentrator is a lens having a focal region and wherein the solar energy collector is provided in the focal region of the lens. A standard lens has a focal point that focuses light in a centre point. Using a plurality of such lenses can create a row or column or even a matrix of focal points. Alternatively, the lens can have a focal line. It is preferred that the lens is a Fresnel lens, preferably an elongated Fresnel lens with a focal line. A Fresnel lens has a design that allows for a large aperture and short focal length without the mass and volume of material that would be required by a lens of conventional design. A Fresnel lens can be made much thinner than a comparable conventional lens, in some cases taking the form of a flat sheet, and can thus capture more oblique light from a light source. As the solar energy concentrator and the solar energy collector may be at limited distance from each other, preferably nearby each other, the focal length will be relatively short and a Fresnel lens can limit the mass and volume of the solar energy concentrator. Using a lens as the solar energy concentrator has the advantage that light, although diffused by the lens, is transmitted towards the inside of the structure.

An elongated Fresnel lens is preferred for elongated solar energy collectors, as the focal line of the elongated lens may then be coincident with a longitudinal axis of the solar energy collector.

According to the invention, the solar energy collector is a solar thermal energy collector converting solar radiation to heat. The heat can subsequently be transported to a heating system or a climate control system, such that the use of electric energy to heat or cool can be reduced. Additionally, the use of fossil fuels and the subsequent CO₂ emission can be reduced.

The solar energy collector comprises an absorber tube having a longitudinal axis, wherein the longitudinal axis of the absorber tube coincides with the tracking axis of the solar energy concentrator. The solar energy is collected and converted to heat by the absorber tube. The absorber tube can comprise a fluid that allows collection of concentrated solar energy by conversion to heat and transportation of this heat to a temperature control system connectable to the absorber tube. The absorber tube can be a single-walled tube. The absorber tube comprises an inner tube containing the absorber fluid and an outer tube containing a vacuum. The temperature control system can be a heating and/or a cooling system to control the temperature within a structure.

According to an embodiment, the solar energy concentrator comprises a reflector for reflecting solar radiation towards the solar energy collector. The reflector is also used to shield the rear face of the frame from concentrated solar energy that is out of focus, i.e. is not directed towards the solar energy collector by the solar energy concentrator.

Preferably, the solar energy collector is positioned between the solar energy concentrator and the reflector. The concentrated solar energy that is out of focus can then be reflected back towards the solar energy collector and not radiated through the rear face. The reflector can be a reflecting element positioned between the solar energy collector and the rear face of the housing. Alternatively, the reflector can be integrated in the solar energy collector and be positioned at a side of the solar energy collector facing the rear face of the housing, a reflecting side of the reflector facing the solar energy collector. An example of an integrated reflector is the use of reflecting coating provided at the side of the solar energy collector facing the rear face of the housing.

The solar energy system is moveably connected to at least one side face of the frame. The solar energy collecting system comprises a sun tracking mechanism that can move the solar energy concentrator with respect to the frame about a tracking axis. Moving the solar energy concentrator about a tracking axis can be done by moving the complete solar energy collecting system. Preferably, the solar energy collector remains stationary with respect to the frame and the solar energy concentrator is pivotable with respect to the frame and the solar energy collector by means of the sun tracking mechanism, i.e. the sun tracking mechanism is arranged to pivot the solar energy concentrator with respect to the solar energy collector and the frame about a tracking axis substantially parallel to the light transmitting front panel in order to track the sun during the day. Preferably, the solar energy collector is connected to at least one side face of the frame and the solar energy concentrator is pivotable with respect to the solar energy collector. Even more preferred is that the solar energy collector extends between two side faces. The solar energy collector can then extend over the whole width of the frame, optimizing the area in which the solar energy can be collected and increasing the efficiency of the solar energy collecting system.

According to an embodiment, the solar energy concentrator is pivotably connected to the solar energy collector. As described above, the sun tracking mechanism is arranged to pivot the solar energy concentrator with respect to the solar energy collector and the frame about a tracking axis substantially parallel to the light transmitting front panel in order to track the sun during the day. To achieve this, the solar energy concentrator can be pivotably connected to the solar energy collector. Alternatively, the solar energy concentrator and the solar energy collector can be pivoted together about a tracking axis that coincides with the longitudinal axis of the solar energy collector.

According to a further embodiment, the solar energy collecting system comprises an actuating system to actuate the sun tracking mechanism.

The actuating system can comprise an electrical or a mechanical motor that actuates a lever that pushes or pulls at the solar energy concentrator such that the concentrator is moved in a pivoting movement with respect to the frame. The solar energy collector can remain stationary during said pivoting, but can also be pivoted about the longitudinal axis coinciding with the tracking axis of the sun tracking mechanism.

According to an embodiment, the sun tracking mechanism follows the sun during daytime from an angle with respect to the horizon of about 5° to about 65°, preferably about 10° to about 62° for a latitude of 51-52°. The sun tracking mechanism follows the sun path during daytime to be able to catch as much sun as possible. The angle of the sun path with respect to the horizon, i.e. the elevation angle, depends on the latitude where the facade module element is used and the day of the year, due to the earth's axis tilt of about 23°26' from the orbital plane. On the equinoxes, i.e. when spring or autumn comes to the hemispheres, the maximum elevation angle of the sun at the equator is 90°. At the equator, the elevation angle will range between about 2.0° at sunrise and sunset to about 90° at noon, i.e. 12.00hrs on the equinoxes. With increasing latitude, the minimum elevation angle at sunrise and sunset will increase and the maximum elevation angle at noon will decrease. On the equinoxes the maximum elevation angle of the sun (MAXEQ) is 90° minus the latitude of the position (LAT), independent on which hemisphere, i.e. MAXEQ = 90° - LAT.

On the northern solstice (NS), i.e. when summer has arrived in the northern hemisphere (NH), the maximum elevation angle for the sun is equal to the elevation angle at the equinox plus the earth axis tilt angle (TILT), which is about 23°26' at the moment, but varies over the course of years, i.e. MAXNS(NH) = MAXEQ + TILT. The opposite goes for the southern hemisphere (SH) at the northern solstice, i.e. the maximum elevation angle is equal to the elevation angle at the equinox for minus the earth axis tilt angle, i.e. MAXNS(SH) = MAXEQ - TILT.

On the southern solstice (SS), i.e. when winter has arrived in the northern hemisphere, the maximum elevation angle for the sun is equal to the elevation angle at the equinox for northern latitudes minus the earth axis tilt angle, i.e. MAXSS(NH) = MAXEQ - TILT. The opposite goes for southern latitudes at the northern solstice, i.e. the maximum elevation angle is equal to the elevation angle at the equinox for southern latitudes plus the earth axis tilt angle, i.e. MAXSS(SH) = MAXEQ + TILT.

The elevation angles for other days of the year for each latitude vary between the maximum elevation angle on the northern solstice and the maximum elevation angle on the southern solstice.
Preferably, the solar energy concentrator is pivotable about the tracking axis to follow the path of the sun during the day from an angle with respect to the horizon of about 10° to about 60°. It is preferred that the solar tracking system moves the solar energy concentrator about the tracking axis, while keeping the solar energy collector stationary.

According to a further embodiment, the light transmitting front panel comprises an optically transparent material. In order to allow transmission of light through the front panel, the front panel can be optically transparent. In the field of optics, transparency is the physical property of allowing light to pass through the material without being scattered. Translucency is a super-set of transparency, and allows light to pass through, but the photons can be scattered either at each of the two or both interfaces of the panel where there is a change in index of refraction, or internally. In other words, a translucent medium allows the transport of light while a transparent medium not only allows the transport of light but allows for the image formation. Transparent materials appear clear, with the overall appearance of one colour, or any combination leading up to a brilliant spectrum of every colour. When light encounters a material, it can interact with the material in several different ways. These interactions depend on the wavelength of the light and the nature of the material. Preferably, the optically transparent front panel comprises at least one of glass, poly(methyl methacrylate) (PMMA) or polycarbonate (PC).

According to the invention, the rear face comprises a panel of an at least partially optically transparent material, such as a sand-blasted material or milk glass. The rear face of the frame can be open to access the solar collecting system, but preferably, the rear face of the frame comprises a panel to achieve insulation of the facade element module and protection against contaminants when in use. The panel can be fully optically transparent, such that the housing of the facade module element can substitute a window. Alternatively, the panel can be partially optically transparent and at least translucent or opaque. The optical transparency or translucency can vary between 1% for a near opaque material to about 99% for a nearly optically transparent material and at least translucent material. Preferably, the optical transparency is between 10-90%, more preferably between 25-75%.

According to an embodiment, a plurality of solar energy collecting systems is provided within the frame, the solar energy collecting systems being positioned at a distance from each other, the solar energy concentrators forming a lamella-structure within the frame. The size of the housing and frame are preferred to be such that more than one solar energy collecting system can be provided within the frame. The solar energy collecting systems are then positioned at regular distances from each other, at least to give the solar energy concentrator space to pivot about the tracking axis without touching another solar energy concentrator and minimizing or even avoiding shading of a first solar energy concentrator by a second solar energy concentrator. In addition, the mutual distance can be optimized to allow as much light as possible to be collected by the solar collecting systems in the housing.

According to another embodiment, the solar energy concentrator is moveable from a concentrating position to concentrate and transmit solar energy to the solar energy collector, to a safety position in which the solar energy concentrator is prevented to concentrate and transmit solar energy to the solar energy collector.

During use it is possible that by radiation of the facade module element, the temperature in the solar energy collector can rise to temperatures above a safety level, for instance the boiling point of the absorber fluid in an absorber tube. In such a case, it is desired that the solar energy collecting system can be switched off, i.e. can be put in such a position wherein solar energy is no longer concentrated. This can be done by rotating at least the solar energy concentrator to a position in which solar radiation is no longer concentrated and transmitted to the solar energy collector.

According to another embodiment, in use the tracking axis of the sun tracking mechanism is oriented in a horizontal direction from a first side panel to a second side panel. When a horizontal orientation of the tracking axis is used, the sun tracking mechanism is arranged to move the solar energy concentrator with respect to the frame about a single horizontal tracking axis to follow the sun during daytime from an elevation angle with respect to the horizon of about 5° to about 65°, preferably about 10° to about 62°.

Alternatively, the housing comprises a top side and a bottom side and in use the tracking axis of the sun tracking mechanism is oriented in a vertical direction from the top side to the bottom side. The tracking axis is preferred to be parallel to at least the front panel. Additionally, the tracking axis can be oriented parallel to the horizon, i.e. horizontal in use in a facade, or perpendicular to the horizon, i.e. vertical in use in a facade. When a vertical orientation of the tracking axis is used, the sun tracking mechanism is arranged to move the solar energy concentrator with respect to the frame about a single vertical tracking axis to follow the sun during daytime from sunrise to sunset from an Eastern direction to a Western direction. Preferably, the pivoting angle range of the tracking axis with respect to rear face of the housing is between 0° and 180°.

The invention also relates to a facade of a structure, comprising at least one facade module element as described above. Preferably, a temperature control system to control the temperature in the structure or a further structure is connected to the solar collecting system of the at least one facade element. The temperature control system can be used for heating in winter and cooling in summer of the structure having the described facade or of a further structure that is places elsewhere at a distance from the facade with the facade module elements. The facade module element can be used in a facade of a structure to collect solar energy usable in a system to control the temperature in the structure or the further structure. In summer it is desired to lower the temperature in the structure with respect to the outside temperature, i.e. to cool. In winter it is desired to increase the temperature in the structure with respect to the outside temperature, i.e. to heat. Using a facade module element in a facade allows for energy-neutral building, i.e. allows a decrease in the use of electricity or energy generated by fossil fuels and reduce the emission of CO₂.

The collected solar energy, which is converted to heat by the solar energy collector, is transported to a temperature control system in the structure. The heat is collected in a buffer, for instance by collecting heated absorber fluid with a temperature of 50 to 300°C. From this buffer, the heat from the absorber fluid can be used in a heat exchanger to heat the inside of the structure to a desired temperature. Alternatively, the heat from the buffer can be used in an absorption system to cool the inside of the structure. Heat that is not used can be stored in the buffer and used when necessary, for instance during rainy or cloudy days, i.e. days with less sunshine then necessary for heating or cooling the building. The buffer can be constructed in various ways, which will not be described in detail here.

To be able to effectively cool a structure with the collected solar energy, the temperature of the absorber fluid is preferred to be at least 120°C. This temperature can be reached by concentrating the energy from the sun, especially with high elevation angles, such as in summer when cooling is desired most. To be able to effectively heat a structure with the collected concentrated solar energy, the temperature of the absorber fluid is preferred to be at least 50°C. This temperature can even be reached in winter when the elevation angles are lowest, by concentrating the energy from the sun and collecting the concentrated energy.

Preferably, a plurality of solar energy systems is provided within the at least one facade module element, the solar energy concentrators forming a lamella-structure facing the front panel of the facade module element.

According to an embodiment, a longitudinal axis of the solar energy concentrator is oriented in a substantially horizontal direction, such that a substantially horizontal lamella-structure is formed. Alternatively, a longitudinal axis of the solar energy concentrator is oriented in a substantially vertical direction, such that a substantially vertical lamella-structure is formed. The solar energy concentrator can be oriented in a longitudinal direction in several ways, of which a substantially horizontal direction, i.e. parallel to the horizon, or a substantially vertical direction, i.e. perpendicular to the horizon, are preferred. However, in case a facade is constructed in an inclined manner with respect to the horizon, i.e. not in a substantially vertical direction, the longitudinal axis of the solar energy concentrator can be oriented parallel to the inclined direction of the facade.

Furthermore, the invention relates to a structure comprising a facade as described above or a facade module element as described above. The structure can be one of a building and a noise-protection wall, or the like. In case the structure is a building, it is preferred that a temperature control system to control the temperature in the structure is connected to the solar collecting system of the at least one facade module element. In case the structure is a noise-protection wall or other single-walled structure, the solar collecting system can be connected to a temperature control system in another building or to a buffer to collect the solar energy of several facades or structures to use in a later stage or in other buildings or structures. Using the solar collecting system in such a structure can increase the energy-neutrality of the structure.

### BRIEF DESCRIPTION OF THE DRAWINGS

The features and advantages of the invention will be appreciated upon reference to the following drawings of a number of exemplary embodiments, in which:
Figure 1 shows a perspective view of a facade comprising several facade module elements according to the invention;
Figure 2 shows a front view of an embodiment of the facade module element according to the invention;
Figure 3 shows a cross-sectional view of the embodiment of fig. 2 along III-III; and
Figure 4 shows a cross-sectional view of the embodiment of fig. 2 along IV-IV.
Figure 5 shows a vertical cross-sectional view of another embodiment of the facade module element.
Figure 6 shows a horizontal cross-sectional view of the embodiment according to fig. 5.

### DESCRIPTION OF ILLUSTRATIVE EMBODIMENTS

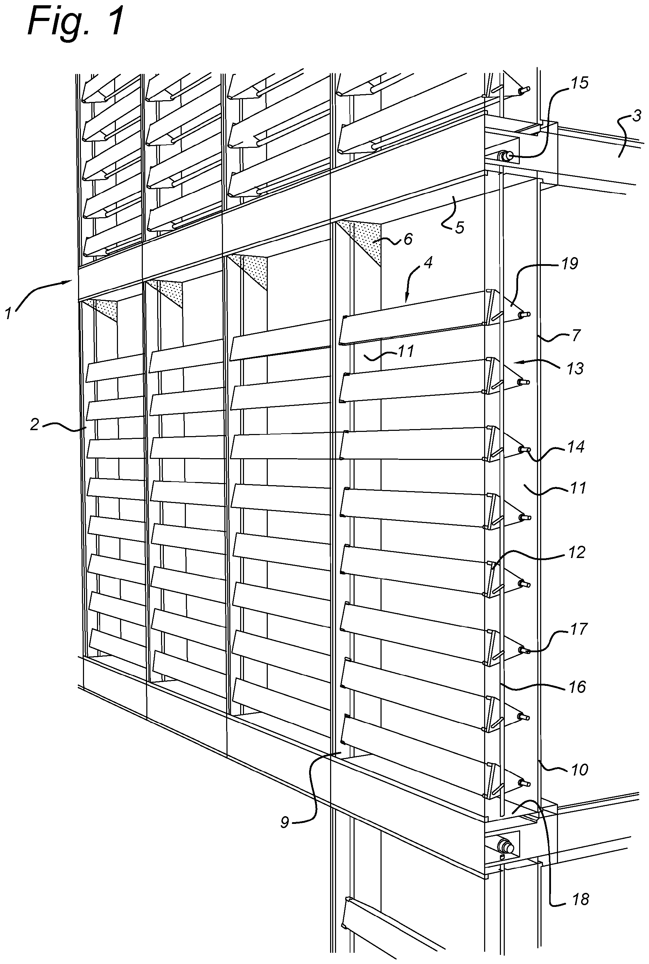

Figure 1 shows a perspective view of a facade 1 comprising several facade module elements 2 that are placed in rows and columns to form the facade 1 of a building. Between each row a floor 3 is provided to form levels in the building. The facade module elements 2 can be placed one after another, but it is also possible to alternate between several facade module elements, such as windows or concrete or brick panel elements.

The facade module elements 2 each comprise a plurality of solar energy collecting systems 4 spaced from each other at a predetermined distance. The solar energy collecting systems 4 form a lamella-structure within the facade module element. At the top of a facade module element 2 a solar energy collecting system 4 is omitted as the top face 5 of the facade module element would cast a shadow 6 over a solar energy collecting system placed at that location. This shadow 6 would decrease the efficiency and the output of the solar energy collecting system placed within the shadow 6.

The facade module element 2 comprises a housing 7 to house the solar energy collecting system 4 within a frame 8. The frame 8 has an optically transparent front panel 9 to shield the solar energy collecting system from environmental conditions, such as wind, rain and contamination. In addition, the frame has an at least translucent rear panel 10 to separate the housing from the inside of the building. The side faces 11 of the frame 8 are closed with panels, such that the each frame 8 forms a separate housing 7 with a contained space to house the solar energy collecting system 4.

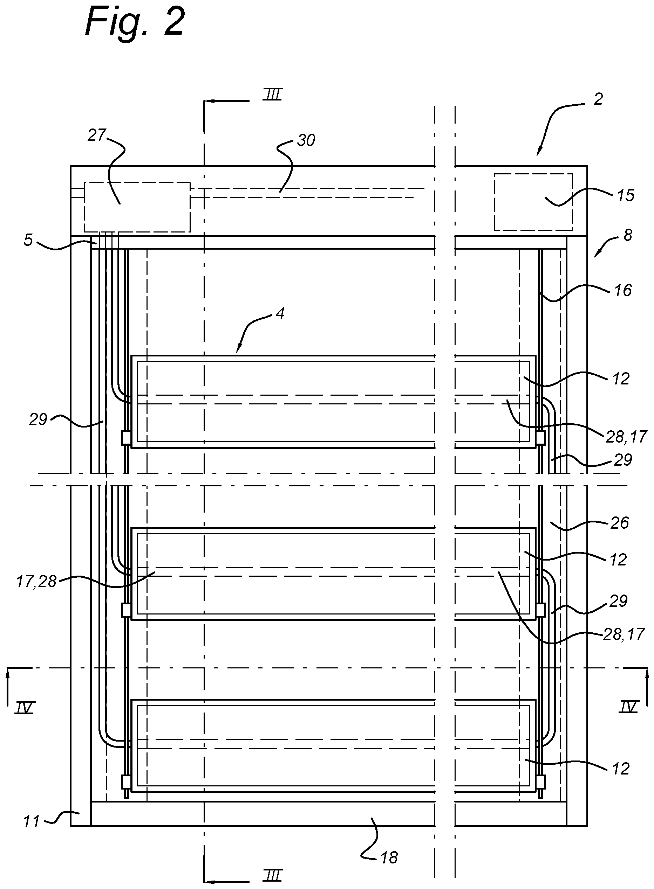

The solar energy collecting systems 4 are oriented in a substantially horizontal direction and are parallel to the front panel 9 of the frame 8 (see figures 2, 3 and 5). The solar energy collecting system 4 comprises a solar energy concentrator 12 extending between the side faces 11 of the housing 7. The solar energy concentrator 12 is pivotably connected to the frame, such that a sun tracking mechanism 13 can move the solar energy concentrator to pivot about a tracking axis 14 of the sun tracking mechanism 13 to follow the sun. The sun tracking mechanism 13 is actuated by an actuator 15 connected to an actuating rod 16.

The solar energy concentrator concentrates incoming solar energy and transmits the concentrated solar energy to a solar energy collector 17. The solar energy collector 17 comprises an absorber tube 28, see figure 2, containing absorber fluid to absorb and convert the solar energy to heat.

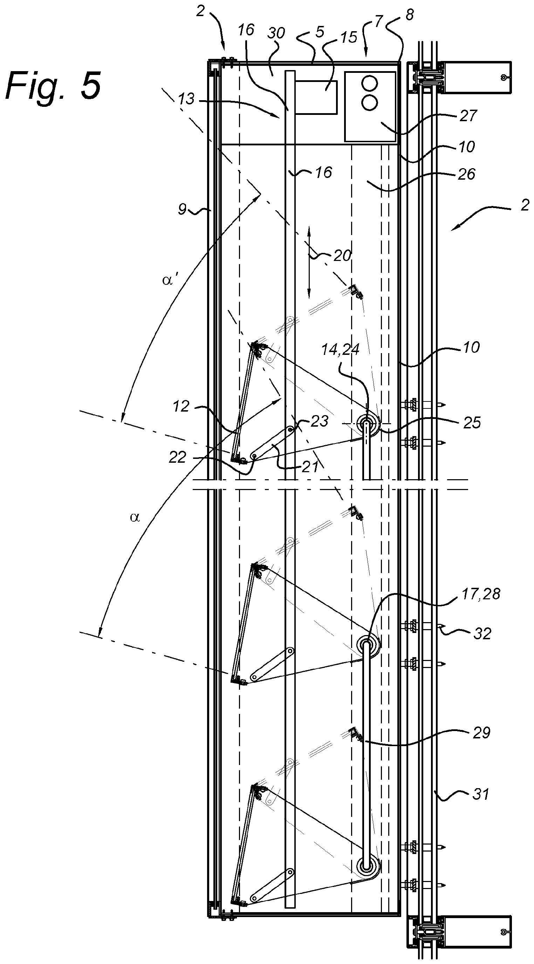

Figure 2 shows a front view of an embodiment of the facade module element 2 comprising a number of solar energy collecting systems 4. The solar energy systems 4 are at a distance from each other and mutually parallel oriented. The frame 8 is shown with closed side faces 11 and a top face 5 and bottom face 18. The top and bottom face are closed as well. Within the frame 8 a support frame 26 is provided to support the solar energy system 4. The absorber tubes 28 are connected by a plurality of S-shaped liquid tubings 29. The absorber tubes are parallel to the solar energy concentrator 12, and will be heated by the concentrated solar energy. The ends of the liquid tubing 29 are connected to a liquid control device 27, such as a pump. The collected heat of the absorber fluid in the absorber tube 28 can be transported to a buffer (not shown) to store the solar energy. The pump 27 is provided in a box 30 that can be positioned within the frame 8 (see figure 5) or on top of the frame 8 (see figure 1, 2 and 3), but is comprised within the housing 7 of the facade module element 2. The box 30 further comprises an actuator 15 to actuate the sun tracking mechanism 13.

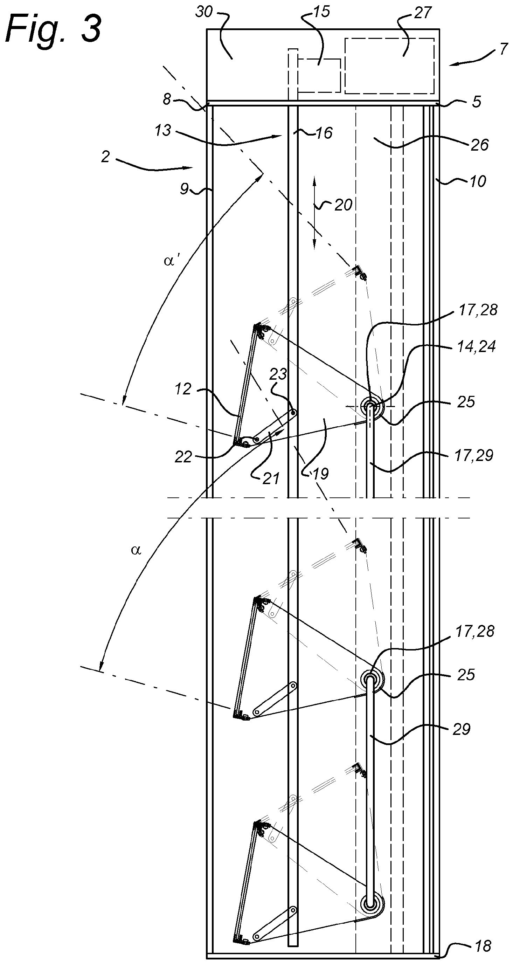

Figure 3 shows a cross-sectional view of the embodiment of fig. 2 along III-III. The cross-section shows a housing 7 with an optically transparent front panel 9, a rear face 10 closed with a panel and a top face 5 and bottom face 18. Within the housing the solar energy collecting system 4 is provided. The solar energy collecting system 4 comprises an elongated Fresnel lens functioning as a solar energy concentrator 12 and an absorber tube 28 functioning as a solar energy collector 17. The Fresnel lens focuses incoming sunlight towards the absorber tube 28, which absorber tube 28 coincides with the focal line of the elongated Fresnel lens. The Fresnel lens is pivotably connected to the absorber tube by connecting element 19 on at least one end of the absorber tube. A sun tracking mechanism 13 comprises an actuator 15 and an actuating rod 16 that can move along arrow 20. The actuating rod 16 is moveably connected to the connecting element 19 by a pivoting element 21 having a first end 22 connected to the connecting element 19 and a second end 23 connected to the actuating rod 16. By moving the actuating rod 16 along arrow 20, the movement of the pivoting element 21 will force the solar energy collector 17 to pivot about a tracking axis 24 of the sun tracking mechanism 13, preferably coinciding with the focal line of the Fresnel lens, with respect to the absorber tube and the frame 8. The sun tracking mechanism tracks the sun path during daytime and allows the Fresnel lens to follow the sun path during daytime. The solar concentrating system 4 is supported by supporting frame 26 within the frame 8 of the facade module element 2. The actuator 15 to actuate the actuating rod 16 is provided within a box 30. A pump 27, to allow transportation of the absorber fluid in the absorber tube 28, is also provided within the box 30.

Figs. 1-3 show a horizontal orientation of the solar energy system 4, i.e. the tracking axis 14 of the sun tracking mechanism 13 is parallel to the horizon when the facade module element 2 is placed in a facade 1. Alternatively, the solar energy system 4 can be in a vertical orientation, i.e. the tracking axis 14 of the sun tracking mechanism 13 is perpendicular to the horizon when the facade module element 2 is placed in a facade 1.

In a horizontal orientation of the tracking axis 14, the Fresnel lens will follow the elevation angle α of the sun during daytime, such that an optimum amount of solar energy will be concentrated and transmitted to the solar energy collector. The range of the elevation angle and therefore the range over which the Fresnel lens will pivot with respect to the frame, depends on the latitude of the position of the facade. The Fresnel lens closest to the top face 5 of the housing 7 can have a pivoting angle range α' that deviates from the elevation angle α, as the top face 5 of the housing 7 can block some of the incoming sunlight during daytime when the elevation angle α is used as pivoting angle for said Fresnel lens.

In a vertical orientation of the tracking axis 14, the Fresnel lens will be placed perpendicularly with respect to the horizon in case of a vertically placed facade. In case of an inclined facade, i.e. the facade and the horizon including an angle larger or smaller than 90°, the tracking axis will be parallel to the inclined direction of the facade. The Fresnel lens will follow the sun path from sunrise to sunset from an Eastern direction (East to Southeast) to a Western direction (Southwest to West) in both the vertical and the inclined orientation. The pivoting angle range of the tracking axis will then depend on the facing direction of the facade, e.g. with a facade facing due South, the pivoting angle range of the tracking axis with respect to rear face 10 of the housing 7 can be at most between 0° and 180°, i.e. from East to West. Preferred is a range between 5° and 175°. For facades facing in a direction deviating from due South, the pivoting angle range will decrease, i.e. either the minimum angle is increased or the maximum angle is decreased, making the pivoting angle range smaller than for a facade facing due South.

The solar energy collecting system may further comprise a reflector 25 to reflect any concentrated solar energy towards the solar energy collector 17. Alternatively, the reflector 25 may be a part of the absorber tube. Additionally, the reflector can be provided as a part of the absorber tube and an additional reflector can be provided as shown in fig. 3. This can be the case if the Fresnel lens and the absorber tube are out of focus. In addition, the reflector 25 can reflect the concentrated solar energy towards the solar energy collector 17 to shield the inside of the building from the concentrated solar energy. The reflector 25 can either pivot with respect to the solar energy collector along with the solar energy concentrator 12, but can also remain stationary, i.e. the solar energy concentrator 12 pivots with respect to the solar energy collector 17, the reflector 25 and the frame 8.

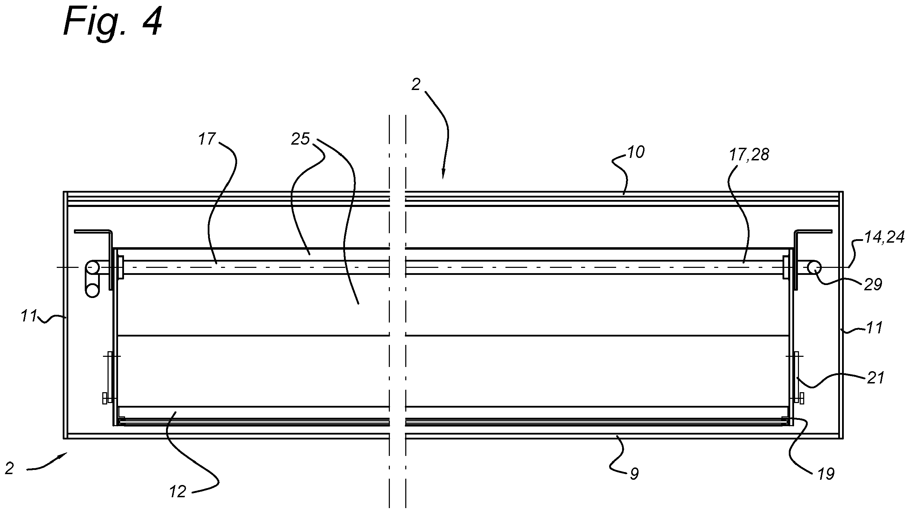

Figs. 3-6 shows the housing 7 with a closed rear face, i.e. a panel provided at the rear face 10. The housing 7 is then attached to the structure, forming an integrated facade 1 as part of the envelope of the building. The closed housing 7 can be provided with a lower than atmospheric pressure or another advantageous atmosphere for the solar energy collecting system, such as a gas or mixture of gases or the like.

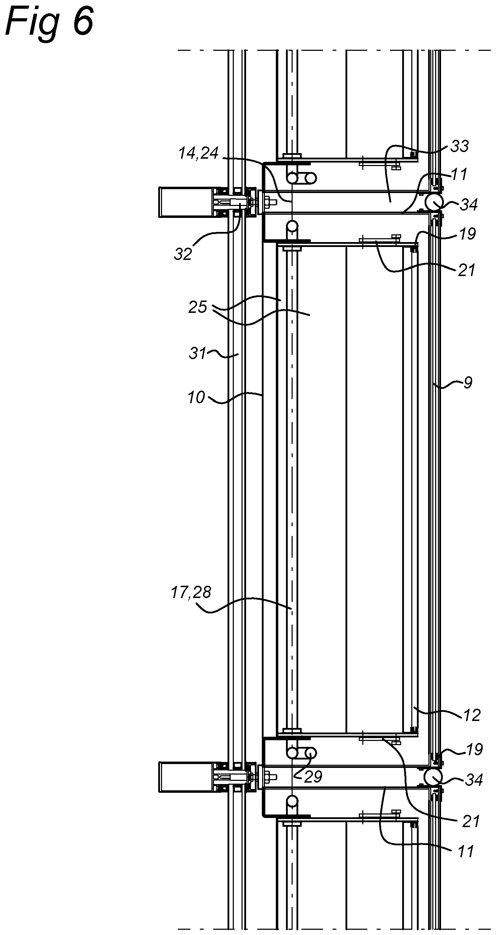

Figures 5 and 6 show another embodiment of the facade module element 2, wherein the box 30 is provided within the frame 8. The front panel 9 and rear panel 10 extend thus over the box 30. The facade module element as shown in figs 3-6 can be used to close the structure by connecting the facade module element 2 directly to the structure. Alternatively, the building envelope can be formed by a further rear panel 31 that closes the structure and is provided with connecting elements to integrate the facade module into the building envelope. The further rear panel 31 is first used to close the structure, after which the facade module element is connected to the further rear panel 31 with connecting elements 32 for forming the building envelope. In case a first and a second facade module element 2 are placed next to each other according to figs. 5 and 6, the space 33 between the respective side faces 11 of the housings 7 can be closed by a sealing element 34. A similar sealing element may be used to close off a similar space between respective top and bottom faces of two facade module elements that are placed one above the other.

Thus, the invention has been described by reference to certain embodiments discussed above. It will be recognized that these embodiments are susceptible to various modifications and alternative forms well known to those of skill in the art.

Many modifications in addition to those described above may be made to the structures and techniques described herein without departing from the scope of the invention.

### LIST OF PARTS

1. Facade
2. Facade module element
3. Floor
4. Solar energy collecting system
5. Top face
6. Shadow
7. Housing
8. Frame
9. Front panel
10. Rear face
11. Side face
12. Solar energy concentrator
13. Sun tracking mechanism
14. Tracking axis
15. Actuator
16. Actuating rod
17. Solar energy collector
18. Bottom face
19. Connecting element
20. Arrow
21. Pivoting element
22. First end of pivoting element
23. Second end of pivoting element
24. Pivoting axis
25. Reflector
26. Support frame
27. Liquid control device
28. Absorber tube
29. Liquid tubing
30. Box
31. Further rear panel
32. Connecting element
33. Space between two facade module elements
34. Sealing element

## Claims

1. Facade module element (2) for a structure or construction, comprising
a. a closed housing (7), comprising a frame (8), a light transmitting front panel (9) and a rear face (10), which are at a distance from each other defined by side faces (11) and wherein the rear face comprises a panel of an at least partially optically transparent material;
b. a solar energy collecting system (4) positioned in the housing, behind the front panel, comprising a solar energy collector (17) and a solar energy concentrator (12) concentrating incident solar energy radiation passing through the front panel for collection by the solar energy collector, and
c. a sun tracking mechanism (13) arranged to move at least the solar energy concentrator with respect to the frame about a tracking axis (14),
wherein the solar energy concentrator is a lens having a focal region and wherein the solar energy collector is a solar thermal energy collector provided in the focal region behind the lens and comprising an absorber tube (28) having a longitudinal axis, wherein the longitudinal axis of the absorber tube coincides with the tracking axis of the solar energy concentrator, the absorber tube comprising an inner tube containing an absorber fluid and an outer tube containing a vacuum..

2. Facade module element according to claim 1, wherein the lens is a Fresnel lens, preferably an elongated Fresnel lens with a focal line.

3. Facade module element according to any of the preceding claims, wherein the absorber fluid allows collection of concentrated solar energy by conversion to heat and transportation of this heat to a temperature control system connectable to the absorber tube.

4. Facade module element according to any of the preceding claims, wherein , the solar energy concentrator comprises a reflector (25) for reflecting solar radiation towards the solar energy collector and, the solar energy collector is positioned between the solar energy concentrator and the reflector.

5. Facade module element according to any of the preceding claims, wherein the solar energy concentrator is pivotably connected to the solar energy collector.

6. Facade module element according to any of the preceding claims, wherein the solar energy collecting system comprises an actuating system (15) to actuate the sun tracking mechanism.

7. Facade module element according to any of the preceding claims, wherein the light transmitting front panel comprises an optically transparent material, preferably comprising at least one of glass, poly(methyl methacrylate) (PMMA) or polycarbonate (PC).

8. Facade module element according to any of the preceding claims, wherein the rear face comprises a panel of sand-blasted material.

9. Facade module element according to any of the preceding claims, wherein a plurality of solar energy collecting systems is provided within the frame, the solar energy collecting systems being positioned at a distance from each other, the solar energy concentrators forming a lamella-structure within the frame.

10. Facade module element according to any of the preceding claims, wherein the solar energy concentrator is moveable from a concentrating position to concentrate and transmit solar energy to the solar energy collector, to a safety position in which the solar energy concentrator is prevented to concentrate and transmit solar energy to the solar energy collector.

11. Facade module element according to any of the preceding claims, which forms a non-structural building element usable to form part of a building envelope, such as a facade (1) of a building.

12. Facade (1) of a structure, comprising at least one facade module element (2) according to any of claims 1-11.

13. Facade according to claim 12, wherein a temperature control system to control the temperature in the structure or a further structure is connected to the solar collecting system (4) of the at least one facade element.

14. Structure comprising a façade (1) according to claim 12 or claim 13 or a facade (2) module element according to any of claims 1-11, wherein the structure is preferably one of a building or a noise-protection wall.

15. Structure according to claim 14, wherein a temperature control system to control the temperature in the structure is connected to the solar collecting system (4) of the at least one facade module element.

## Patentansprüche

1. Fassadenmodulelement (2) für einen Aufbau oder eine Konstruktion, umfassend:
a. ein geschlossenes Gehäuse (7), das einen Rahmen (8), ein lichtdurchlässiges Vorderpaneel (9) und eine Rückfläche (10) umfasst, die mit einem durch Seitenflächen (11) definierten Abstand voneinander beabstandet sind, wobei die Rückfläche ein Paneel aus einem wenigstens teilweise optisch transparenten Material umfasst,
b. ein Sonnenenergiesammelsystem (4), das in dem Gehäuse hinter dem Vorderpaneel angeordnet ist und einen Sonnenenergiekollektor (17) und einen Sonnenenergiekonzentrator (12), der einfallende und durch das Vorderpaneel gehende Sonnenenergiestrahlung für das Sammeln durch den Sonnenenergiekollektor konzentriert, umfasst,
c. einen Sonnenverfolgungsmechanismus (13), der angeordnet ist, um wenigstens den Sonnenergiekonzentrator in Bezug auf den Rahmen um eine Verfolgungsachse (14) zu bewegen,
wobei der Sonnenenergiekonzentrator eine Linse mit einem Brennbereich ist und wobei der Sonnenergiekollektor ein thermischer Sonnenenergiekollektor ist, der in dem Brennbereich hinter der Linse vorgesehen ist und ein Absorptionsrohr (28) mit einer Längsachse umfasst, wobei die Längsachse des Absorptionsrohrs mit der Verfolgungsachse des Sonnenenergiekonzentrators zusammenfällt, wobei das Absorptionsrohr ein inneres Rohr, das ein Absorptionsfluid enthält, und ein äußeres Rohr, das ein Vakuum enthält, umfasst.

2. Fassadenmodulelement nach Anspruch 1, wobei die Linse eine Fresnellinse und vorzugsweise eine längliche Fresnellinse mit einer Brennlinie ist.

3. Fassadenmodulelement nach einem der vorstehenden Ansprüche, wobei das Absorptionsfluid das Sammeln von konzentrierter Sonnenenergie durch eine Wandlung zu Wärme und das Transportieren der Wärme zu einem Temperatursteuersystem, das mit dem Absorptionsrohr verbunden werden kann, ermöglicht.

4. Fassadenmodulelement nach einem der vorstehenden Ansprüche, wobei der Sonnenenergiekonzentrator einen Reflektor (25) zum Reflektieren von Sonnenstrahlung zu dem Sonnenenergiekollektor umfasst und wobei der Sonnenenergiekollektor zwischen dem Sonnenenergiekonzentrator und dem Reflektor angeordnet ist.

5. Fassadenmodulelement nach einem der vorstehenden Ansprüche, wobei der Sonnenenergiekonzentrator schwenkbar mit dem Sonnenenergiekollektor verbunden ist.

6. Fassadenmodulelement nach einem der vorstehenden Ansprüche, wobei das Sonnenenergiesammelsystem ein Betätigungssystem (15) für das Betätigen des Sonnenverfolgungsmechanismus umfasst.

7. Fassadenmodulelement nach einem der vorstehenden Ansprüche, wobei das lichtdurchlässige Vorderpaneel ein optisch transparentes Material umfasst, das vorzugsweise Glas, Poly(methylmethacrylat) (PMMA) und/oder Polycarbonat (PC) umfasst.

8. Fassadenmodulelement nach einem der vorstehenden Ansprüche, wobei die Rückfläche ein Paneel aus einem sandgestrahlten Material umfasst.

9. Fassadenmodulelement nach einem der vorstehenden Ansprüche, wobei eine Vielzahl von Sonnenenergiesammelsystemen in dem Rahmen vorgesehen sind, wobei die Sonnenenergiesammelsysteme mit einem Abstand voneinander angeordnet sind, wobei die Sonnenenergiekonzentratoren eine Lamellenstruktur in dem Rahmen bilden.

10. Fassadenmodulelement nach einem der vorstehenden Ansprüche, wobei der Sonnenenergiekonzentrator von einer Konzentrationsposition für das Konzentrieren und Übertragen von Sonnenenergie zu dem Sonnenenergiekollektor zu einer Sicherheitsposition, in welcher unterbunden wird, dass der Sonnenenergiekonzentrator Sonnenenergie konzentriert und zu dem Sonnenenergiekollektor überträgt, bewegt werden kann.

11. Fassadenmodulelement nach einem der vorstehenden Ansprüche, das ein nicht-strukturelles Bauelement bildet, das für das Ausbilden einer Bauhülle wie etwa einer Fassade (1) eines Gebäudes verwendet werden kann.

12. Fassade (1) mit einem Aufbau, der wenigstens ein Fassadenmodulelement (2) gemäß einem der Ansprüche 1-11 umfasst.

13. Fassade nach Anspruch 12, wobei ein Temperatursteuersystem zum Steuern der Temperatur in dem Aufbau oder einem weiteren Aufbau mit dem Sonnenenergiesammelsystem (4) des wenigstens einen Fassadenelements verbunden ist.

14. Aufbau mit einer Fassade (1) gemäß dem Anspruch 12 oder 13 oder einem Fassadenmodulelement (2) gemäß einem der Ansprüche 1-11, wobei der Aufbau vorzugsweise ein Gebäude oder eine Lärmschutzwand ist.

15. Aufbau nach Anspruch 14, wobei ein Temperatursteuersystem für das Steuern der Temperatur in dem Aufbau mit dem Sonnenenergiesammelsystem (4) des wenigstens einen Fassadenmodulelements verbunden ist.

## Revendications

1. Élément de module de façade (2), destiné à une structure ou une construction, comprenant
a. un boîtier fermé (7) comprenant un cadre (8), un panneau frontal (9) de transmission de lumière et une face arrière (10) qui sont à une distance l'un de l'autre définie par des faces latérales (11), et dans lequel la face arrière comprend un panneau en matériau au moins partiellement transparent optiquement ;
b. un système à collecteur d'énergie solaire (4) placé dans le boîtier, derrière le panneau frontal, comprenant un collecteur d'énergie solaire (17) et un concentrateur d'énergie solaire (12) concentrant le rayonnement d'énergie solaire incident passant à travers le panneau frontal pour être collecté par le collecteur d'énergie solaire, et
c. un mécanisme de poursuite de soleil (13) conçu pour déplacer au moins le concentrateur d'énergie solaire par rapport au cadre autour d'un axe de poursuite (14),
dans lequel le concentrateur d'énergie solaire est une lentille ayant une région focale et dans lequel le collecteur d'énergie solaire est un collecteur d'énergie thermique solaire disposé dans la région focale derrière la lentille et comprenant un tube absorbeur (28) ayant un axe longitudinal, dans lequel l'axe longitudinal du tube absorbeur coïncide avec l'axe de poursuite du concentrateur d'énergie solaire, le tube absorbeur comprenant un tube intérieur qui contient un fluide absorbant et un tube extérieur qui contient un vide.

2. Élément de module de façade selon la revendication 1, dans lequel la lentille est une lentille de Fresnel, de préférence une lentille de Fresnel allongée avec une ligne focale.

3. Élément de module de façade selon l'une quelconque des revendications précédentes, dans lequel le fluide absorbant permet la collecte de l'énergie solaire concentrée par conversion en chaleur et le transport de cette chaleur vers un système de commande de température pouvant être raccordé au tube absorbeur.

4. Élément de module de façade selon l'une quelconque des revendications précédentes, dans lequel, le concentrateur d'énergie solaire comprend un réflecteur (25) destiné à réfléchir le rayonnement solaire vers le collecteur d'énergie solaire, et le collecteur d'énergie solaire est positionné entre le concentrateur d'énergie solaire et le réflecteur.

5. Élément de module de façade selon l'une quelconque des revendications précédentes, dans lequel le concentrateur d'énergie solaire est raccordé de manière pivotante au collecteur d'énergie solaire.

6. Élément de module de façade selon l'une quelconque des revendications précédentes, dans lequel le système de collecteur d'énergie solaire comprend un système d'actionnement (15) destiné à actionner le mécanisme de poursuite de soleil.

7. Élément de module de façade selon l'une quelconque des revendications précédentes, dans lequel le panneau frontal de transmission de lumière comprend un matériau transparent optiquement, comprenant de préférence au moins un élément parmi le verre, le poly(méthacrylate de méthyle) (PMMA) ou le polycarbonate (PC).

8. Élément de module de façade selon l'une quelconque des revendications précédentes, dans lequel la face arrière comprend un panneau en matériau sablé.

9. Élément de module de façade selon l'une quelconque des revendications précédentes, dans lequel une pluralité de systèmes de collecte d'énergie solaire sont prévus dans le cadre, les systèmes de collecte d'énergie solaire étant placés à distance les uns des autres, les concentrateurs d'énergie solaire formant une structure à lamelles dans le cadre.

10. Élément de module de façade selon l'une quelconque des revendications précédentes, dans lequel le concentrateur d'énergie solaire peut être déplacé d'une position de concentration pour concentrer et transmettre de l'énergie solaire au collecteur d'énergie solaire, à une position de sécurité dans laquelle le concentrateur d'énergie solaire est empêché de concentrer et transmettre de l'énergie solaire au collecteur d'énergie solaire.

11. Élément de module de façade selon l'une quelconque des revendications précédentes, qui forme un élément de bâtiment non structurel utilisable pour faire partie d'une enveloppe de bâtiment, tel qu'une façade (1) d'un bâtiment.

12. Façade (1) d'une structure, comprenant au moins un élément de module de façade (2) selon l'une quelconque des revendications 1 à 11.

13. Façade selon la revendication 12, dans laquelle un système de commande de température destiné à commander la température dans la structure ou une autre structure est raccordé au système collecteur solaire (4) dudit au moins un élément de façade.

14. Structure comprenant une façade (1) selon la revendication 12 ou la revendication 13 ou un élément de module de façade (2) selon l'une quelconque des revendications 1 à 11, dans laquelle la structure est de préférence un bâtiment ou un mur antibruit.

15. Structure selon la revendication 14, dans laquelle un système de commande de la température destiné à commander la température dans la structure est raccordé au système collecteur solaire (4) dudit au moins un élément de module de façade.
